# EUROPÄISCHE PATENTANMELDUNG

(11) **EP 2 302 417 A2**
(43) Veröffentlichungstag der Anmeldung: **30.03.2011**
(21) Anmeldenummer: 10010143.5
(22) Anmeldetag: 22.09.2010
(51) Int. Cl.: G01V 3/10

(54) **Handführbare Vorrichtung zum Detektieren von in einem Untergrund, insbesondere einer Wand oder dergleichen, befindlichen metallischen Objekten**

(30) Priorität: 23.09.2009 DE 102009042616
(71) Anmelder: ROHE, Christoph, 44627 Herne (DE)
(72) Erfinder: ROHE, Christoph, 44627 Herne (DE)
(74) Vertreter: Schöneborn, Holger

(57) **Zusammenfassung**

Die Erfindung betrifft eine handführbare Vorrichtung (1) zum Detektieren von in einem Untergrund, insbesondere einer Wand oder dergleichen, befindlichen metallischen Objekten (38), aufweisend eine Sensoreinrichtung (14) und eine Anzeigeeinheit (3), die über eine Datenverarbeitungseinrichtung (15) miteinander verbunden sind, wobei die Sensoreinrichtung (14) wenigstens eine Sensoreinheit (17, 18) aufweist, die während des Detektierens automatisch Relativbewegungen zum Untergrund ausführt, wobei die Relativbewegungen in einer Ebene stattfinden, die im Wesentlichen parallel zu der Oberfläche des Untergrundes angeordnet ist, und wobei die Vorrichtung (1) eine mit der Datenverarbeitungseinrichtung (15) verbundene Einrichtung zum Erfassen der Bewegungen der gesamten Vorrichtung (1) relativ zum Untergrund aufweist. Um eine möglichst intuitiv und einfach handhabbare Vorrichtung (1) bereitstellen zu können, wird mit der Erfindung vorgeschlagen, dass die Sensoreinrichtung (14) und die Datenverarbeitungseinrichtung (15) in einem gemeinsamen Gehäuse (2) angeordnet sind, an dem auch die Anzeigeeinheit (3) und die Einrichtung zum Erfassen der Bewegungen der gesamten Vorrichtung (1) relativ zum Untergrund angebracht sind, wobei die Anzeigeeinheit (3) ein flächig ausgebildetes Display ist, das während des Detektierens parallel zur Oberfläche des Untergrunds angeordnet ist, und wobei die Vorrichtung (1) derart eingerichtet ist, dass ein von der Anzeigeeinheit (3) momentan angezeigtes Bild ein virtuelles Echtzeitbild der inneren metallischen Struktur des momentan unterhalb der Anzeigeeinheit (3) befindlichen Untergrundes ist.

## Beschreibung

Die Erfindung betrifft eine handführbare Vorrichtung zum Detektieren von in einem Untergrund, insbesondere einer Wand oder dergleichen, befindlichen metallischen Objekten, aufwelsend eine Sensoreinrichtung und eine Anzeigeeinheit, die über eine Datenverarbeitungseinrichtung miteinander verbunden sind, wobei die Sensoreinrichtung wenigstens eine Sensoreinheit aufwelst, die während des Detektierens automatisch Relativbewegungen zum Untergrund ausführt, wobei die Relativbewegungen in einer Ebene stattfinden, die im Wesentlichen parallel zu der Oberfläche des Untergrundes angeordnet ist, und wobei die Vorrichtung eine mit der Datenverarbeitungselnrichtung verbundene Einrichtung zum Erfassen der Bewegungen der gesamten Vorrichtung relativ zum Untergrund aufweist.

Entsprechende Vorrichtungen, welche auch als Metalidetektoren bezeichnet werden, sind bekannt und werden beispielsweise zum Aufsuchen von metallischen Gegenständen im Erdreich verwendet. Hierzu können sie beispielsweise mit aktiven oder passiven elektromagnetischen Sensoren versehen sein. Aktive elektromagnetische Sensoren senden ein elektromagnetisches Feld aus und messen die Verstimmung dieses Feldes, welche durch ein im zu untersuchenden Untergrund vorhandenes metallisches Objekt verursacht wird, während passive elektromagnetische Sensoren die Verstimmung eines externen Feldes, insbesondere des Erdmagnetfeldes bestimmen. Bei vielen bekannten Metalldetektoren wird die Stärke der Feldverstimmung durch eine akustische und/oder optische Anzeige wiedergegeben.

Nachteilig bei herkömmlichen Metalldetektoren ist, dass die Sensoreinrichtung zum gewünschten Detektieren über der Oberfläche des zu untersuchenden Untergrundes hin und her bewegt werden muss. Hiermit ist eine relativ unkomfortable Handhabung von Metalldetektoren verbunden.

Die DE 44 36 078 A1 schlägt einen einfacher handhabbaren Metalldetektor vor, welcher als scannender Metalldetektor bezeichnet werden kann. Der Metalldetektor weist ein Sensormodul mit zwei aktiven elektromagnetischen Sensoren auf, die während des Detektierens automatisch Relativbewegungen zu dem zu untersuchenden Untergrund ausführen, wobei die Relativbewegungen in einer Ebene stattfinden, die im Wesentlichen parallel zur Oberfläche des Untergrundes angeordnet ist. Ungewünschte nutzerseitige Schwenkbewegungen dieses Metalldetektors sind während des Detektierens nicht erforderlich. Der Metalldetektor weist eine Einrichtung zum Erfassen der Bewegungen der gesamten Vorrichtung relativ zum Untergrund auf. Zum Erfassen dieser Relativbewegungen umfasst die Einrichtung an Räder gekoppelte Weggeber.

Bei dem Metalldetektor der DE 44 36 078 A1 werden Sensorsignale an einen separat angeordneten Rechner weitergegeben und dort zur Darstellung auf einem Monitor des Rechners verarbeitet. Dies verlangt, dass ein Nutzer dieses Metalldetektors beim Detektieren auf den Monitor sieht und dabei den Metalldetektor beziehungsweise dessen Sensoreinrichtung ohne Hinsehen über die Oberfläche des zu untersuchenden Untergrundes führt. Dies stellt eine relativ komplizierte und wenig intuitive Handhabung eines Metalldetektors dar, was mit einer Einschränkung seiner Verwendungsmöglichkeiten unmittelbar einher geht.

Hiervon ausgehend ist es die Aufgabe der Erfindung, eine handführbare Vorrichtung zum Detektieren von in einem Untergrund, insbesondere einer Wand oder dergleichen, befindlichen metallischen Objekten bereitzustellen, welche gegenüber herkömmlichen Vorrichtungen sehr einfach und intuitiv handhabbar ist, was neue Anwendungsmöglichkeiten eröffnet.

Diese Aufgabe wird bei einer handführbaren Vorrichtung der eingangs genannten Art dadurch gelöst, dass die Sensoreinrichtung und die Datenverarbeitungseinrichtung in einem gemeinsamen Gehäuse angeordnet sind, an dem auch die Anzeigeeinheit und die Einrichtung zum Erfassen der Bewegungen der gesamten Vorrichtung relativ zum Untergrund angebracht sind, wobei die Anzeigeeinheit ein flächig ausgebildetes Display ist, das während des Detektierens annähernd parallel zur Oberfläche des Untergrundes angeordnet ist, und wobei die Vorrichtung derart eingerichtet ist, dass ein von der Anzeigeeinheit momentan angezeigtes Bild ein virtuelles Echtzeitbild der inneren metallischen Struktur des momentan unterhalb der Anzeigeeinheit befindlichen Untergrundes ist.

Mit der Erfindung wird eine kompakte handführbare Vorrichtung vorgeschlagen, welche es ermöglicht, dass ein Nutzer der Vorrichtung beim Detektieren sowohl die gewünschte Positionierung der Sensoreinrichtung exakt vornehmen, als auch die Anzeigeeinheit einsehen kann, ohne den Blick von der Vorrichtung abwenden zu müssen. Hierdurch wird eine sehr intuitive und einfache Handhabung der Vorrichtung gewährleistet. Dieser Vorteil wird zudem durch die besonders kompakte Ausgestaltung der Vorrichtung begünstigt, welche eine Bedienung der Vorrichtung mit lediglich einer Hand erlaubt. Dabei sind alle Komponenten der Vorrichtung in beziehungsweise an dem gemeinsamen Gehäuse angeordnet, wobei die Dimensionierung des Gehäuses vorzugsweise derart auf die Dimensionierung des flächig ausgebildeten Displays abgestimmt ist, dass das Display im Wesentlichen die zweidimensionale Dimensionierung des Gehäuses parallel zur Oberfläche des zu untersuchenden Untergrundes bestimmt.

Dadurch, dass die Anzeigeeinheit während des Detektierens parallel zur Oberfläche des zu untersuchenden Untergrundes angeordnet ist und dabei ein virtuelles Echtzeltbild der inneren metallischen Struktur des momentan unter der Anzeigeeinheit befindlichen Untergrundes anzeigt, wird einem Verwender der erfindungsgemäßen handführbaren Vorrichtung der Eindruck vermittelt, er könne über das Display unmittelbar in den darunter angeordneten Untergrund einblicken und dabei eventuell dort befindliche metallische Objekte sowie deren Ausrichtung auffinden. Der Maßstab der Darstellung kann beispielsweise ca. 1:1 betragen, wobei geringfügige Vergrößerungen oder Verkleinerungen um bis zu 40 %, vorzugsweise maximal 20 % noch als annähernde 1:1-Darstellung angesehen werden. Alternativ kann eine verkleinerte Darstellung beispielsweise im Verhältnis 1:2, 1:3, 1:4, 1:5, 1:6 oder ähnlich gewählt werden. Bei einer Vergrößerung oder Verkleinerung ist darauf zu achten, dass das Zentrum der vergrößerten beziehungsweise verkleinerten Darstellung der Struktur des Untergrundes einer bestimmten momentan unter diesem Zentrum in dem Untergrund befindlichen Struktur entspricht, das Zentrum und diese Struktur also deckungsgleich sind. Das bedeutet, dass eine senkrecht zu dem Display angeordnete und durch das Zentrum der vergrößerten oder verkleinerten Darstellung verlaufende Gerade auch durch die bestimmte momentan unter dem Zentrum in dem Untergrund befindliche Struktur verläuft. Alle übrigen Bereiche der Darstellung sind nicht deckungsgleich mit der unter der handführbaren Vorrichtung befindlichen Struktur. Bei dem Display handelt es sich vorzugsweise um ein Matrixdisplay.

Diese Eigenschaften und Vorteile der erfindungsgemäßen handführbaren Vorrichtung sind insbesondere vorteilhaft bei der Verwendung derselben zum Aufsuchen von metallischen Objekten, wie beispielsweise Rohrleitungen, Kabel oder dergleichen, in einem Untergrund wie einer Wand, einer Decke oder einem Boden, um zu verhindern, dass in Bereichen, in denen solche metallische Objekte im Untergrund vorhanden sind, eine Bohrung oder ähnliches vorgenommen wird, bei welcher die metallischen Objekte beschädigt werden könnten. Die erfindungsgemäße handführbare Vorrichtung kann beispielsweise auf eine Wand im Bereich einer gewünschte Bohrstelle aufgesetzt werden, um festzustellen, ob bei der Bohrung ein metallisches Objekt beschädigt würde. Die erfindungsgemäße handführbare Vorrichtung kann so zur Bestimmung einer unschädlichen Bohrstelle verwendet werden. Hierzu kann beispielsweise ein Markierungsstift zunächst oberhalb des Zentrums der Darstellung im Display über der ermittelten, geeigneten Bohrstelle positioniert werden. Anschließend wird die handführbare Vorrichtung entfernt und der Markierungsstift an die gewünschten Bohrstelle herangeführt, um eine Markierung dieser Bohrstelle für die später durchzuführende Bohrung vorzunehmen.

Die mit der Erfindung erreichbaren Vorteile der einfachen und intuitiven Handhabbarkeit sind mit Metalidetektoren des Standes der Technik nicht erreichbar, da diese keinen kompakten Aufbau aufweisen und neben der vom Nutzer gehaltenen Sensoreinrichtung zusätzliche, separate Datenverarbeltungseinrichtungen sowie damit verbundene Anzeigeeinheiten erfordern. Hierdurch wird die Handhabung solcher Metalidetektoren kompliziert und wenig intuitiv. Insbesondere ist die Anzeigeeinheit meist entfernt von der Sensoreinrichtung angeordnet und, wie beispielsweise bei der DE 44 36 078 A1, der Monitor eines separaten Rechners. Ein derartiger Aufbau eines Metalldetektorsystems kann nicht gemäß der erfindungsgemäßen handführbaren Vorrichtung einfach und intuitiv gehandhabt werden und vermittelt einem Nutzer eines solchen Systems nicht den Eindruck, dass er auf einfache Art und Welse über die Anzeigeeinheit einen Einblick in die Beschaffenheit und innere Struktur des zu untersuchenden Untergrundes unterhalb der Anzeigeeinheit erhält.

Die Sensoreinheit kann beispielsweise als aktive oder passive Sensoreinheit ausgebildet sein. Auch ist es möglich die Sensoreinheiten als Radarsensoren auszubilden. Welche der genannten Ausführungsformen gewählt wird, hängt von den jeweiligen Anforderungen an die erfindungsgemäße handführbare Vorrichtung ab.

Eine aktive Sensoreinheit weist vorzugsweise eine Sendespule und eine Empfangsspule auf. Mittels der Sendespule wird ein elektromagnetisches Feld vorgegebener Charakterisierung ausgesendet, während mit der Empfangsspule das ausgesendete elektromagnetische Feld empfangen wird, welches bei Anwesenheit von metallischen Objekten im Untergrund eine charakteristische Dämpfung aufweist, die auf das Vorhandensein von metallischen Objekten im Untergrund schließen lässt. Ebenso ist es möglich, die Sende- und Empfangsfunktion in eine einzige Spule zu integrieren. Diese Ausgestaltung kann zur Schaffung einer maximalen Kompaktheit der handführbaren Vorrichtung herangezogen werden. Je mehr Sensoreinheiten die Sensoreinrichtung aufweist, desto höher ist die in einer bestimmten Zeit erfasste Datendichte und somit die erzielbare Auflösung bei der Darstellung der inneren Struktur des untersuchten Untergrundes als virtuelles Echtzeitbild.

Gemäß einer vorteilhaften Ausgestaltung der Erfindung ist die Sensoreinheit an einem Träger angeordnet, der um eine Rotationsachse drehbar an dem Gehäuse gelagert ist, die während des Detektierens im Wesentlichen senkrecht zur Oberfläche des Untergrundes ausgerichtet ist. Die von der Sensoreinheit ausgeführten Relativbewegungen sind somit Drehbewegungen. Durch diese zweidimensionalen Bewegungen kann ein relativ großer Bereich des zu untersuchenden Untergrundes abgetastet werden. Die Rotationsbewegung des Trägers und somit der wenigstens einen Sensoreinheit kann beispielsweise durch einen mit der Drehachse zusammenwirkenden Elektromotor erreicht werden. Gleichzeitig muss eine Einrichtung zum Erfassen der Bewegungen der gesamten händführbaren Vorrichtung relativ zum Untergrund vorhanden sein. Durch diese Ausgestaltung der Erfindung ist es folglich auf einfache Art und Weise möglich, einen Bereich bestimmter Ausdehnung des zu untersuchenden Untergrundes abzutasten, ohne dass ein Nutzer der Vorrichtung hierzu lästige Schwenkbewegungen ausführen muss.

Nach einer weiteren vorteilhaften Ausgestaltung der Erfindung weist die Sensoreinrichtung eine mit der Sensoreinheit verbundene Auswertungseinheit auf, die dazu eingerichtet ist, die von der Sensoreinheit erzeugten analogen Sensorsignale zu erfassen und die erfassten analogen Sensorsignale an die Datenverarbeitungseinrichtung zu übertragen, wobei die Übertragung der Sensorsignale elektronisch, optisch oder per Funk erfolgt. Die Auswertungseinheit kann beispielsweise auch dazu eingerichtet sein, die Sendespule einer aktiven Sensoreinheit anzusteuern und die von der Empfangsspule der aktiven Sensoreinheit erzeugten Sensorsignale zu erfassen. Alternativ kann die Auswertungseinheit zur Ansteuerung von Radarsensoren und zur Erfassung von mittels der Radarsensoren erzeugten Echosignalen ausgebildet sein. Weist die Sensoreinrichtung zwei oder mehrere Sensoreinheiten auf, kann entweder vorgesehen sein, dass für jede Sensoreinheit jeweils eine Auswertungseinheit oder dass für alle Sensoreinheiten eine einzige mehrkanalige Auswertungseinheit vorgesehen ist.

Zur optischen Übertragung der Sensorsignale von der Auswertungseinheit zur Datenverarbeitungseinrichtung können beispielsweise eine Fotodiode, insbesondere LED, sowie ein Fototransistor vorgesehen sein. Eine elektronische Übertragung der Sensorsignale von der Auswertungseinheit zur Datenverarbeitungseinrichtung kann hingegen beispielsweise über Schleifkontakte erfolgen.

Eine weitere vorteilhafte Ausgestaltung der Erfindung sieht vor, dass die Auswertungseinhelt oder die Datenverarbeitungseinrichtung derart eingerichtet sind, dass eine Umwandlung der erfassten analogen Sensorsignale in digitale Sensorsignale erfolgen kann. Hierdurch werden Informationsverluste während der Übertragung der Sensorsignale weitestgehend vermieden.

Nach einer weiteren vorteilhaften Ausführungsform der Erfindung weist die handführbare Vorrichtung eine mit der Datenverarbeitungseinrichtung direkt oder indirekt verbundene Einrichtung zum Erfassen der jeweiligen Winkelposition der Sensoreinheit auf. Die Verbindung kann beispielsweise auch Indirekt über die Auswertungseinheit erfolgen. Diese Einrichtung kann beispielsweise eine Winkelkodierscheibe mit Referenzpunkt aufweisen, die starr mit der rotierenden Sensoreinheit verbunden ist und mit einem Positionssensor wie einem Inkrementalgeber, welcher starr mit dem Gehäuse verbunden ist, zur Erfassung der momentanen Winkelposition der Sensoreinheit gegenüber dem Positionssensor zusammenwirkt. Ebenso möglich ist die Verwendung eines Resolvers.

Soweit in dieser Anmeldung von einer Verbindung mit der Datenverarbeitungseinrichtung die Rede ist, kann diese stets direkt oder indirekt sein, d. h. auch über andere Einheiten wie die Auswertungseinheit erfolgen. Wichtig ist lediglich, dass die jeweiligen Informationen letztlich zur Datenverarbeitungseinrichtung gelangen.

Die Vorrichtung weist darüber hinaus auch eine mit der Datenverarbeitungseinrichtung verbundene Einrichtung zum Erfassen von Bewegungen der Vorrichtung relativ zum Untergrund auf. Diese Einrichtung dient der Erfassung von translatorischen Bewegungen der handführbaren Vorrichtung, was notwendig ist, da erst die Kombination der über die Sensoreinrichtung erhaltenen Informationen mit der Information über die Position der Vorrichtung relativ zum Untergrund die Erstellung eines vollständigen Bildes erlaubt.

Hierbei verwendete Positionsaufnehmer können beispielsweise als mindestens eine, beispielsweise zwei mit einem Drehgeber oder Winkelmeßsystem verbundene Rollen ausgebildet sein, die drehbar an dem Gehäuse gelagert sind und auf der Oberfläche des Untergrundes abrollen. Die aktuelle Position der Vorrichtung kann beispielsweise über eine Integration der Drohgeberstellungen errechnet werden. Der Positionsaufnehmer kann alternativ auch, wie von einer Computermaus bekannt, als Kugel ausgebildet sein, welche mit zwei orthogonal zueinander angeordneten Inkrementalgebern abgetastet wird. Des Weiteren Ist es möglich, ein lasergestütztes 2D-Positionserfassungssystem zu verwenden, welches ebenfalls bei Computermäusen zum Einsatz kommt. Auch ist es möglich, die momentane Position der Vorrichtung über 2D- oder 3D-Beschleunigungssensoren zu erfassen. Solche Beschleunigungssensoren geben als Signal einen Begchleunigungsvektor aus. Durch mehrfache Integration dieser Signale ist es möglich, den Bahnveriauf der Bewegung der Vorrichtung zu ermitteln. Nachteilig bei diesen Ausgestaltungen ist, dass bei der zur Bestimmung der Position der Vorrichtung erforderlichen Integration der Messsignale stets auch die Messfehler mit integriert werden. Dadurch kann es schon nach relativ geringen Bahnstrecken bzw. Zeitabschnitten zu Fehlern bei der Positionsbestimmung kommen. Dieser Fehler kann beispielsweise durch Plausibilitätsberechnungen (best-fit-Methode) eliminiert werden. Wird die Vorrichtung beispielsweise hin und her bewegt, so dass dieselbe Position mehrmals überfahren wird, so können die durch Integration entstandenen Fehler mittels der Plausibilitätsberechnungen korrigiert werden. Bei einer relativ hohen Rotationsgeschwindigkeit des Trägers und somit der wenigstens einen Sensoreinheit besteht bei relativ langsamen Bewegungen der gesamten Vorrichtung relativ zum Untergrund die Möglichkeit, Untergruridinformationen mehrfach hintereinander aufzunehmen und anschließend zu einem Gesamtbild des zu untersuchenden Untergrundes zu korrelieren. Herbei empfiehlt es sich, die Vorrichtung in überlappenden Bahnen über den Untergrund zu bewegen. Vorzugsweise werden das Gesamtbild des Untergrundes und die Darstellung der momentan unter der Vorrichtung befindlichen Struktur des Untergrundes gleichzeitig, beispielsweise nebeneinander, in dem Display angezeigt. Bevorzugt wird in dem Gesamtbild die momentane Position der Vorrichtung angezeigt. Ein entsprechender Scan des gesamten Untergrundes zur Erstellung eines Gesamtbildes des Untergrundes sollte vorzugsweise in einem Durchgang durchgeführt werden, ohne den Kontakt zwischen Vorrichtung und Untergrund zu verlieren.

Ferner ist es möglich, die Position der Vorrichtung mittels einer optischen Abtastung der Oberfläche des zu untersuchenden Untergrundes mit Hilfe digitaler Bildverarbeitung zu ermitteln. Hierzu sind an dem Gehäuse der Vorrichtung wenigstens eine Kamera und wenigstens eine Beleuchtungselnhelt zum Beleuchten der Oberfläche des Untergrundes angeordnet. Die Kamera nimmt ununterbrochen die Oberflächenstruktur des Untergrundes auf. Die dabei generierten Daten können digitalisiert und von einem Bildverarbeitungsprozessor ausgewertet werden. Anhand des Versatzes von markanten Merkmalen jedes aufgenommenen Einzelbildes von Bild zu Bild kann der Bildverarbeitungsprozessor die Bewegung der Vorrichtung relativ zum Untergrund erfassen. Die erfassten Bildinformationen können mit den Informationen der Messsensoren korreliert und in einer Parallelmatrix abgespeichert werden. Wird die Vorrichtung anschließend wieder über dieselbe Stelle der Oberfläche des Untergrundes bewegt, kann die Bildverarbeitungssoftware die bereits abgespeicherten markanten Merkmale der Oberfläche des Untergrundes erkennen. Vorteilhaft bei dieser Ausgestaltung der Einrichtung zum Erfassen von Bewegungen der Vorrichtung relativ zum Untergrund gegenüber den oben vorgeschlagenen Möglichkeiten ist, dass das damit verbundene Messverfahren nicht relativ zur Bewegung der Vorrichtung sondern absolut zum Untergrund ist und nicht die Nachteile der Integration auftreten. Voraussetzung für diese Ausgestaltung ist jedoch, dass eine entsprechende Oberflächenstruktur mit erfassbaren markanten Merkmalen gegeben ist. Sollte dieses nicht gegeben sein, kann beispielsweise eine Strukturpappe oder ähnliches vor dem Scannen auf die Oberfläche des zu untersuchenden Untergrundes aufgebracht werden. Bei dem Einsatz der digitalen Bildverarbeitung ist weiter von Vorteil, dass ein gesamter Untergrund zur Erstellung eines Gesamtbildes des Untergrundes nicht in einem Durchgang, wie oben beschrieben, durchgeführt werden muss. Statt dessen kann der Scan des gesamten Untergrundes unterbrochen und zu einem späteren Zeitpunkt fortgesetzt werden. Die Vorrichtung kann anhand eines Abgleichs von vorab gespeicherten markanten Oberflächenmerkmaien mit zu dem späteren Zeitpunkt erfassten markanten Merkmalen repositioniert werden.

Weiterhin wird vorgeschlagen, dass die Sensoreinrichtung wenigstens zwei an dem Träger angeordnete Sensoreinheiten aufweist, die beide als aktive Sensoreinheit ausgebildet sind.

Gemäß einer vorteilhaften Ausgestaltung der Erfindung weisen die Sensoreinheiten jeweils mindestens jeweils eine Spule auf, die so gewickelt sind, dass ihre Empfindlichkeitsmaxima auf einer Achse liegen, wobei die Achse des Empfindlichkeitsmaximums mindestens einer Sensoreinheit gegenüber der Rotationsachse derart in einer senkrecht zum radialen Abstand von Rotationsachse und dieser Sensoreinheit angeordneten Ebene geneigt ist, dass diese bei einer Bewegung um die Rotationsachse eine vorauseilende oder nacheilende Bewegung durch den zu untersuchenden Raum durchführt, während die Achse des Empfindlichkeitsmaximums der anderen Sensoreinheit eine andere oder keine Neigung zur Rotationsachse aufweist. Der Neigungswinkel gegenüber der Rotationsachse beträgt vorzugsweise 5 bis 60°, insbesondere 10 bis 45° und besonders bevorzugt 20 bis 30°, Ein im Untergrund befindliches metallisches Objekt wird zunächst von einer Sensoreinheit und nach dem Weiterdrehen des Trägers von der weiteren Sensoreinheit erfasst. Die beiden Sensoreinheiten sind um einen vorgebbaren Winkel gegeneinander versetzt auf dem drehbaren Träger angeordnet, wobei der Winkel beispielsweise 180° beträgt. Die Sensoreinheit, deren Achse des Empfindlichkeitsmaxima gegenüber der Rotationsachse des Trägers um einen Neigungswinkel geneigt angeordnet ist, erfasst das im Untergrund befindliche Objekt jedoch nicht nach Drehung des Trägers um den vorgebbaren Winkel, sondern entweder bereits früher, falls die Achse der Empfindlichkeitsmaxima eine vorauseilende Bewegung durch den zu untersuchenden Raum durchführt, oder später, falls die Achse der Empfindlichkeitsmaxima eine nacheilende Bewegung durch den zu untersuchenden Raum durchführt. In dem Moment, in dem das Objekt mittels der geneigt angeordneten Sensoreinheit erfasst wird, wird gleichzeitig die Winkelstellung des Trägers bzw. der geneigt angeordneten Sensoreinheit erfasst, wobei diese Winkelstellung von dem vorgebbaren Winkel, um den die beiden Sensoreinheiten gegeneinander versetzt an dem drehbaren Träger angeordnet sind, abweicht. In Kenntnis dieser Abweichung und des Neigungswinkels, unter dem die geneigt angeordnete Sensoreinheit an dem Träger angeordnet ist, lässt sich auf die Tiefe des Objektes in dem zu untersuchenden Untergrund schließen.

Vorzugsweise werden die jeweils erfassten Winkelpositionen der Sensoreinheiten und die jeweils mit diesen erfassten Dämpfungsverläufe bzgl der Dämpfung des ausgesendeten elektromagnetischen Feldes erfasst und an die Datenverarbeitungseinrichtung übermittelt, wonach eine Korrelierung der erfassten Dämpfungsverläufe über den Winkel erfolgen kann. Hierdurch lässt sich eindeutig auf die Tiefe des metallischen Objektes im Untergrund schließen. Bei den Spulen kann es sich um von den Sendespulen getrennte Empfangsspulen oder auch um Spulen handeln, die die Sende- und Empfangsfunktion miteinander vereinen. Derartige Spulen sind dem Fachmann hinlänglich bekannt.

Nach einer alternativen vorteilhaften Ausgestaltung der Erfindung sind die beiden Sensoreinheiten als Radarsensoren ausgebildet sind, wobei die Richtachse mindestens eines Radarsensors gegenüber der Rotationsachse des Trägers derart in einer senkrecht zum radialen Abstand von Rotationsachse und diesem Radarsensors angeordneten Ebene geneigt ist, dass diese Richtachse bei einer Bewegung dieses Radarsensors um die Rotationsachse eine vorauseilende oder nacheilende Bewegung durch den zu untersuchenden Raum durchführt, während die Richtachse des jeweils anderen Radarsensors eine andere oder keine Neigung zur Rotationsachse aufweist. Der Neigungswinkel der wenigstens einen Richtachse gegenüber der Rotationsachse beträgt vorzugsweise 5 bis 60°, insbesondere 10 bis 45° und besonders bevorzugt 20 bis 30°. Durch diese Ausgestaltung der Erfindung wird ein im Untergrund befindliches metallisches Objekt zunächst von einer Sensoreinheit und nach dem Weiterdrehen des Trägers von der weiteren Sensoreinheit erfasst. Die beiden Sensoreinheiten sind dabei um einen vorgebbaren Winkel gegeneinander versetzt auf dem drehbaren Träger angeordnet, wobei der Winkel beispielsweise 180° beträgt. Der Radarsensor, dessen Richtachse gegenüber der Rotationsachse des Trägers um einen Neigungswinkel geneigt angeordnet ist, erfasst das im Untergrund befindliche Objekt jedoch nicht nach Drehung des Trägers um den vorgebbaren Winkel, sondern entweder bereits früher, falls die Richtachse eine vorauseilende Bewegung durch den zu untersuchenden Raum durchführt, oder später, falls die Richtachse eine nacheilende Bewegung durch den zu untersuchenden Raum durchführt. In dem Moment, in dem das Objekt mittels des geneigt angeordneten Radarsensors erfasst wird, wird gleichzeitig die Winkelstellung des Trägers bzw. des geneigt angeordneten Radarsensors erfasst, wobei diese Winkelstellung von dem vorgebbaren Winkel, um den die beiden Radarsensoren gegeneinander versetzt an dem drehbaren Träger angeordnet sind, abweicht. In Kenntnis dieser Abweichung und des Neigungswinkels, unter dem der geneigt angeordnete Radarsensor an dem Träger angeordnet ist, lässt sich' auf die Tiefe des Objektes in dem zu untersuchenden Untergrund schließen.

Vorzugsweise werden die jeweils erfassten Winkelpositionen der Radarsensoren und die jeweils mit diesen erfassten Echoverläufe erfasst und an die Datenverarbeitungseinrichtung übermittelt, wonach mittels der Datenverarbeitungseinrichtung die erfassten Echoverläufe über die erfassten Winkel korrellerbar sind. Hierdurch lässt sich eindeutig auf die Tiefe des metallischen Objektes im Untergrund schließen.

Statt der Verwendung von aktiven Sensoren oder Radarsensoren können auch andere Arten von Sensoren eingesetzt werden, mit denen die vorbeschriebene Tiefenerfassung durchführbar ist.

Ferner wird es als vorteilhaft erachtet, wenn die handführbare Vorrichtung eine am Gehäuse befestigte Handhabe, z. B. einen Griff aufweist. An dieser kann ein Verwender die handführbare Vorrichtung zur funktionsgerechten Betätigung derselben greifen.

Mit der Erfindung wird weiter eine handführbare Vorrichtung zum Detektieren von in einem Untergrund, insbesondere einer Wand oder dergleichen, befindlichen metallischen Objekten offenbart, aufweisend eine Sensoreinrichtung und eine Anzeigeeinheit, die über eine Datenverarbeitungseinrichtung miteinander verbunden sind, wobei die Sensoreinrichtung wenigstens zwei an einem Träger angeordnete Sensoreinheiten aufweist, die während des Detektierens automatisch Rotationsbewegungen relativ zum Untergrund ausführen, wobei die Rotationsbewegungen in einer Ebene statffinden, die im Wesentlichen parallel zur Oberfläche des Untergrundes angeordnet ist, und wobei die Vorrichtung eine mit der Datenverarbeitungseinrichtung verbundene Einrichtung zum Erfassen der Bewegungen der gesamten Vorrichtung relativ zum Untergrund aufweist. Diese handführbare Vorrichtung ist **dadurch gekennzeichnet, dass** die beiden Sensoreinheiten als aktive Sensoreinheiten ausgebildet sind und somit jeweils mindestens eine Spule aufweisen, die so gewickelt ist, dass ihre Empfindlichkeitsmaxima auf einer Achse liegen, wobei die Achsen der Empfindlichkeitsmaxima mindestens einer Sensoreinheit gegenüber der Rotationsachse derart geneigt ist, dass diese bei einer Bewegung um die Rotationsachse eine vorauseilende oder nacheilende Bewegung durch den zu untersuchenden Raum durchführt, während die Achse des Empfindlichkeitsmaximums der anderen Sensoreinheit eine andere oder keine Neigung zur Rotationsachse aufweist. Diese Erfindung kann auch unabhängig von der in Anspruch 1 beschriebenen Anordnung von Sensoreinrichtung und Datenverarbeitungseinrichtung in einem Gehäuse ausgeführt werden.

Diese handführbare Vorrichtung kann gemäß einer oder einer Kombination der vorgenannten Ausgestaltungen ausgebildet sein.

Mit der Erfindung wird ferner eine handführbare Vorrichtung zum Detektieren von in einem Untergrund, insbesondere einer Wand oder dergleichen, befindlichen metallischen Objekten offenbart, aufweisend eine Sensoreinrichtung und eine Anzeigeeinheit, die über eine Datenverarbeitungseinrichtung miteinander verbunden sind, wobei die Sensoreinrichtung wenigstens zwei an einem Träger angeordnete Sensoreinheiten aufweist, die während des Detektierens automatisch Rotationsbewegungen relativ zum Untergrund ausführen, wobei die Rotationsbewegungen in einer Ebene stattfinden, die im Wesentlichen parallel zur Oberfläche des Untergrundes angeordnet ist, und wobei die Vorrichtung eine mit der Datenverarbeitungseinrichtung verbundene Einrichtung zum Erfassen der Bewegungen der gesamten Vorrichtung relativ zum Untergrund aufweist. Diese handführbare Vorrichtung ist **dadurch gekennzeichnet, dass** die beiden Sensoreinheiten als Radarsensoren ausgebildet sind, wobei die Richtachse mindestens eines Radarsensors gegenüber der Rotationsachse des Trägers derart geneigt ist, dass diese Richtachse bei einer Bewegung dieses Radarsensors um die Rotationsachse eine vorauseilende oder nacheilende Bewegung durch den zu untersuchenden Raum durchführt, während die Richtachse des jeweils anderen Radarsensors eine andere oder keine Neigung zur Rotationsachse aufweist. Diese Erfindung kann auch unabhängig von der in Anspruch 1 beschriebenen Anordnung von Sensoreinrichtung und Datenverarbeitungseinrichtung in einem Gehäuse ausgeführt werden.

Diese handführbare Vorrichtung kann gemäß einer oder einer Kombination der vorgenannten Ausgestaltungen ausgebildet sein

Weiteren Vorteile und' Merkmale der vorliegenden Erfindung werden im Folgenden anhand der beispielhaft in den anhängenden Figuren gezeigten Ausführungsformen der Erfindung näher erläutert. Dabei zeigen
- Figur 1:: eine schematische Darstellung eines Ausführungsbeispiels der erfindungsgemä- ßen handführbaren Vorrichtung in Drauf- sicht,
- Figur 2:: eine transparente Seitenansicht der in Figur 1 gezeigten Ausführungsform der erfindungsgemäßen handführbaren Vor- richtung,
- Figur 3:: ein Ausführungsbeispiel für die Sensorein- richtung,
- Figur 4:: eine schematische Darstellung der Sensoreinrichtung in Seitenansicht und in einer Draufsicht, und
- Figur 5:: eine Ansicht der In Figur 4 gezeigten Sensoreinrichtung von links gemäß dem Pfeil A und von rechts gemäß Pfeil B.

In den Figuren sind der Aufbau und die Funktionsweise der handführbaren Vorrichtung 1 unter Verwendung von aktiven Sensoreinheiten 17 und 18 mit Sende- 34 und Empfangsspulen 35 gezeigt. Dem Fachmann ist es klar, dass diese Sensoreinheiten auch eine andere Ausgestaltung, beispielsweise als Radarsensoren, aufweisen können.

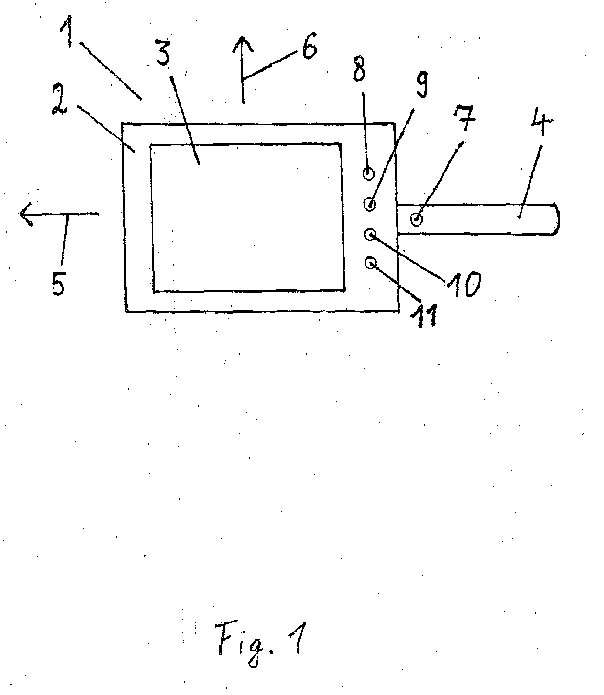

Figur 1 zeigt eine Draufsicht auf eine Ausführungsform der erfindungsgemäßen handführbaren Vorrichtung 1. Diese weist ein Gehäuse 2 auf, an dem eine flächige Anzeigeeinheit 3 angeordnet ist. An dem Gehäuse 2 ist eine Handhabe 4 angebracht, welche ein Nutzer der handführbaren Vorrichtung 1 ergreifen kann, um die Detektion von metallischen Objekten in einem Untergrund durchführen zu können. Bei einer solchen Detektion wird die handführbare Vorrichtung 1 gemäß den Pfeilen 5 und 6 über die Oberfläche eines zu untersuchenden Untergrundes geführt. Die hierbei stattfindenden Relativbewegungen der handführbaren Vorrichtung 1 relativ zum Untergrund werden mittels einer geeigneten Einrichtung zum Erfassen solcher Bewegungen erfasst, die beispielsweise als eine am nicht dargestellten Boden des Gehäuses 2 angeordnete Kugel ausgebildet ist, die auf der Oberfläche des zu untersuchenden Untergrundes abrollen kann und deren jeweilige Position mit zueinander orthogonal ausgerichteten Inkrementalgebern abgetastet wird, wie es von einer Computermaus bekannt ist.

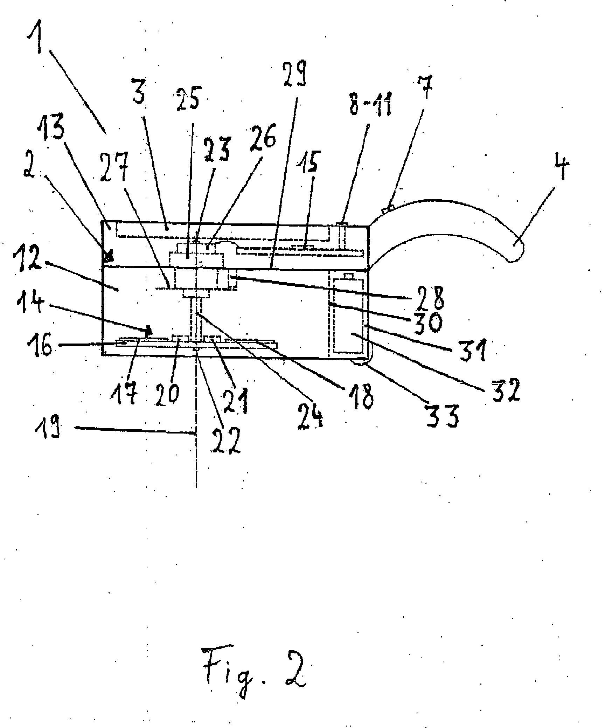

An der als Griff ausgebildeten Handhabe 4 ist ein Bedienelement 7 angeordnet, bei dessen Betätigung zunächst das bislang von der Anzeigeeinheit 3 angezeigte virtuelle Echtzeitbild gelöscht wird. Anschließend findet eine Datenaufzeichnung statt, solange das Bedienelement 7 betätigt wird. Hierzu führen die in den Figuren 2 bis 5 gezeigten Sensoreinheiten 17 und 18 automatisch Relativbewegungen zum Untergrund aus. Während dieser Datenaufzeichnung wird ein neues virtuelles Echtzeitbild ständig durch die neu aufgenommenen Daten aktualisiert. Auf der Anzeigeeinheit 3, welche vorzugsweise als Matrixdisplay ausgebildet ist, wird nun ein virtuelles Echtzeitbild der inneren Struktur des momentan unterhalb der Anzeigeeinheit 3 befindlichen Untergrundes angezeigt. Am Gehäuse 2 sind des Weiteren Bedienelemente 8 bis 11 angeordnet, mit welchen Grundeinstellungen der handführbaren Vorrichtung 1 verändert werden können.

Figur 2 zeigt die in Figur 1 gezeigte handführbare Vorrichtung 1 in einer transparenten Seitenansicht. Das Gehäuse 2 weist eine Unterschale 12 sowie eine Oberschale 13 auf. Im Gehäuse 2 sind die Sensoreinrichtung 14 und eine Datenverarbeitungseinrichtung 15 angeordnet. Die Sensoreinrichtung 14 weist einen rotierenden Träger 16 auf, an dem zwei Sensoreinheiten 17 und 18 angeordnet sind. Der Träger 16 ist um eine Drehachse 19 drehbar In dem Gehäuse 2 gelagert, wobei die Drehachse 19 während des Detektierens senkrecht zur Oberfläche des zu untersuchenden Untergrundes ausgerichtet ist.

Jeder Sensoreinheit 17 und 18 ist eine Auswertungseinheit 20 beziehungsweise 21 zugeordnet. Diese Auswertungseinheiten 20 und 21 steuern die aktiven Sensoreinheiten 17 beziehungsweise 18 an, erfassen die mit den Sensoreinheiten 17 und 18 ermittelten Sensorsignale und senden diese Sensorsignale an die Datenverarbeitungseinrichtung 15. Diese Übertragung der Sensorsignale von den Auswertungseinheiten 20 und 21 zu der Datenverarbeitungseinrichtung 15 erfolgt über eine Fotodiode 22, welche fest mit dem Träger 16 verbunden ist, zu einem Fototransistor 23, der fest mit der Oberschale 13 verbunden ist, und von dort über eine Kabelverbindung zur Datenverarbeitungseinrichtung 15. Um Störungen während der Übertragung der Sensorsignale von der Fotodiode 22 zum Fototransistor 23 zu vermeiden, ist zwischen der Fotodiode 22 und dem Fototransistor 23 eine Hohlwelle 24 angeordnet, durch die die Sensorsignale gesendet werden. Um des Weiteren Informationsverluste bei dieser Übertragung der Sensorsignale zu vermeiden, werden die von den Sensoreinheiten 17 und 18 erzeugten analogen Sensorsignale mittels der Auswertungseinheiten 20 und 21 In digitale Sensorsignale umgewandelt. Die Hohlwelle 24 ist mit einem Motor 25, vorzugsweise einem Elektromotor, verbunden, über den der Träger 16 in Drehung versetzt werden kann. Zur Versorgung der Sensoreinrichtung 14 mit Energie ist ein Energieübertrager 26 vorgesehen, welcher beispielsweise als Schleifringübertrager oder als induktiver Überträger ausgebildet sein kann. Alternativ könnte der Energieübertrager 26 auch per Lichtquelle und Fotovoltaik realisiert sein.

Zur Erfassung der Winkelposition der Sensoreinheiten 17 und 18 ist an der Hohlwelle 24 eine Winkelkodlerscheibe 27 mit Referenzpunkt drehfest angeordnet, welche mit einem als Inkrementalgeber ausgebildeten Positionssensor 28 zusammenwirkt.

Im Gehäuse 2 der handführbaren Vorrichtung 1 sind weitere Abschirmplatten 29 und 30 angeordnet, weiche dafür sorgen, dass die Bauteile der Oberschale 13 und die im Batteriefach 31 angeordnete Batterie 32 keine störenden Einflüsse auf das von den Sensoreinheiten 17 und 18 erzeugte und erfasste elektromagnetische Feld ausüben. An der Unterschale 12 des Gehäuses 2 ist ein Positionsaufnehmer 33 angeordnet, mit dem eine translatorische Relativbewegung der handführbaren Vorrichtung 1 relativ zum Untergrund erfasst werden kann. Der Positionsaufnehmer 33 ist als gummibereifte Rolle ausgebildet, welche zur Erfassung der translatorischen Relativbewegungen mit einem Winkelgeber oder Winkelmeßsystem verbunden ist.

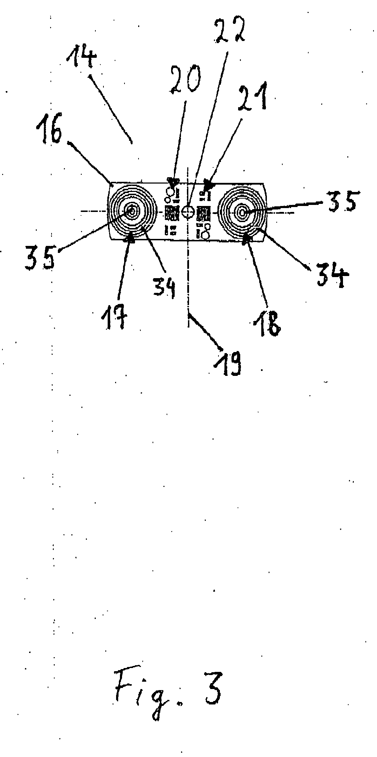

Figur 3 zeigt eine Detailansicht der Sensoreinrichtung 14. Es ist eine Draufsicht auf den Träger 16 gezeigt, wobei die Sensoreinheiten 17 und 18 jeweils eine Sendespule 34 und eine Empfangsspule 35 aufweisen, die jeweils spiralförmig in einer Wicklungsebene gewickelt sind. Ebenfalls sind die aus mehreren Bauelementen bestehenden Auswertungseinheiten 20 und 21 zu erkennen. Im Bereich der Drehachse 19 des Trägers 16 ist die Fotodiode 22 angeordnet.

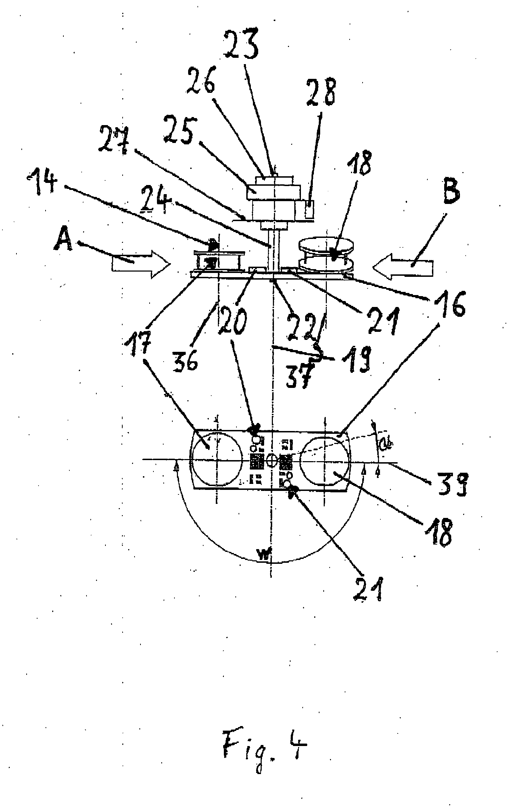

Figur 4 zeigt eine Detailansicht der handführbaren Vorrichtung 1. Es ist der Träger 16 mit den daran angeordneten Sensoreinheiten 17 und 18 bzw. Auswertungseinheiten 20 und 21 dargestellt, welcher über die Hohlwelle 24 an den Motor 25 gekoppelt ist. Die Achse 36 des Empfindlichkeitsmaximums der Sensoreinheit 17 ist senkrecht zur Rotationsebene der Sensoreinheiten 17 und 18 ausgerichtet, d. h. die Sensoreinheit 17 ist gegenüber der Rotationsebene der Sensoreinheiten 17 und 18 nicht geneigt angeordnet. Die Achse 37 des Empfindlichkeitsmaximums der Sensoreinheit 18 Ist hingegen nicht senkrecht zur Rotationsebene der Sensoreinheiten 17 und 18 ausgerichtet, was bedeutet, dass die Sensoreinheit 18 gegenüber der Rotationsebene der Sensoreinhelten 17 und 18 um einen Neigungswinkel ϕ geneigt angeordnet ist. Dies bedeutet auch, dass die Sensoreinheiten 17 und 18 sich bezüglich ihrer Neigung gegenüber der Rotationsebene der Sensoreinheiten 17 und 18 unterscheiden.

Im unteren Teil der Figur 4 ist eine Draufsicht auf die Sensoreinrichtung 14 gemäß dem oberen Teil von Figur 4 gezeigt. Es sind wieder die auf dem Träger 16 angeordneten Sensoreinheiten 17 und 18 sowie die zugehörigen Auswertungseinheiten 20 und 21 zu erkennen. Die beiden Sensoreinheiten 17 und 18 sind um den vorgebbaren Winkel w gegeneinander versetzt auf dem Träger 16 angeordnet, wobei der Winkel w 180° beträgt. Die Achse 37 des Empfindlichkeitsmaximums der zweiten Sensoreinheit 18 ist um den Neigungswinkel ϕ gegenüber der Rotationsachse der Sensoreinheiten 17 und 18 in einer senkrecht zu dem Abstand von Rotationsachse und Sensoreinheit 18 angeordneten Ebene geneigt, wobei der Neigungswinkel ϕ 20° beträgt. Ein Dämpfungsmaximum im erfassten elektromagnetischen Feld, weiches durch ein metallisches Objekt, das in der Tiefe Y im Untergrund angeordnet ist, wird mit der Sensoreinheit 18 entsprechend der Tiefe Y um den Messwinkel α später (eher beim gegenläufigen System) erfasst, wobei der Messwinkel α eine Funktion der Tiefe Y und des Neigungswinkels ϕ ist. Da der Messwinkel α erfasst wird und der Neigungswinkel ϕ bekannt ist, lässt sich somit auf die Tiefe Y des Objektes schließen.

Die Winkelpositionen der Sensoreinheiten 17 und 18, welche über die Winkelkodierscheibe 27 und den Positionsaufnehmer 28 bestimmt werden, und die mit den Sensoreinheiten 17 und 18 erfassten Dämpfungsveriäufe werden erfasst und an die Datenverarbeitungseinrichtung 15 übertragen. Mittels der Datenverarbeitungseinrichtung 15 erfolgt eine Korrelation der mit den beiden Sensoreinheiten 17 und 18 erfassten Dämpfungsverläufe über den Winkel, wodurch eindeutig auf die Tiefe Y des metallischen Objektes geschlossen werden kann.

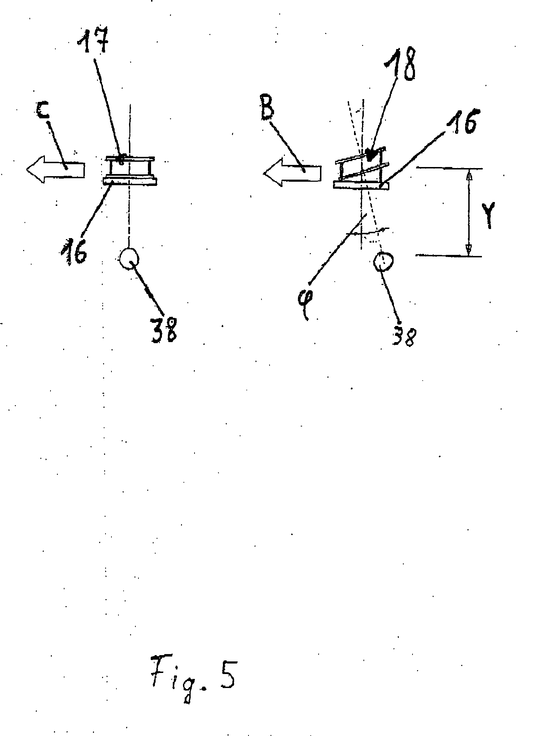

Figur 5 zeigt im linken Teil eine Ansicht der in Figur 4 gezeigten Sensoreinrichtung 14 aus der Richtung des Pfeils A in Figur 4. Der Pfeil C zeigt die dabei gegebene Rotationsrichtung an. Der rechte Teil von Figur 5 zeigt eine Ansicht der in Figur 4 dargestellten Sensoreinrichtung 14 aus der Richtung des Pfeils B in Figur 4. Pfeil B zeigt auch hier die Rotationsrichtung an. Aus einer Zusammenschau der Figuren 4 und 5 wird deutlich, dass das metallische Objekt 38 von der Sensoreinheit 18 mit dem Neigungswinkel ϕ um den Messwinkel α später als mit der Sensoreinheit 17 erfasst wird, was den Rückschluss auf die Tiefe Y des metallischen Objekts im Untergrund erlaubt.

Die anhand der Figuren beschriebenen Ausführungsbeispiele dienen der Erläuterung und sind nicht beschränkend.

## Patentansprüche

1. Handführbare Vorrichtung (1) zum Detektieren von in einem Untergrund, insbesondere einer Wand oder dergleichen, befindlichen metallischen Objekten (38), aufweisend eine Sensoreinrichtung (14) und eine Anzeigeeinheit, die über eine Datenverarbeitungseinrichtung (15) miteinander verbunden sind, wobei die Sensoreinrichtung (14) wenigstens eine Sensoreinheit (17, 18) aufweist, die während des Detektierens automatisch Relativbewegungen zum Untergrund ausführt, wobei die Relativbewegungen in einer Ebene stattfinden, die im Wesentlichen parallel zur Oberfläche des Untergrundes angeordnet ist, und wobei die Vorrichtung (1) eine mit der Datenverarbeitungseinrichtung (15) verbundene Einrichtung zum Erfassen der Bewegungen der gesamten Vorrichtung (1) relativ zum Untergrund aufweist,
**dadurch gekennzeichnet, dass** die Sensoreinrichtung (14) und die Datenverarbeitungseinrichtung (15) in einem gemeinsamen Gehäuse (2) angeordnet sind, an dem auch die Anzeigeeinheit (3) und die Einrichtung zum Erfassen der Bewegungen der gesamten Vorrichtung (1) relativ zum Untergrund angebracht sind, wobei die Anzeigeeinheit (3) ein flächig ausgebildetes Display ist, das während des Detektierens im Wesentlichen parallel zur Oberfläche des Untergrundes angeordnet ist, und wobei die Vorrichtung (1) derart eingerichtet ist, dass ein von der Anzeigeeinheit (3) momentan angezeigtes Bild ein virtuelles Echtzeitbild der inneren metallischen Struktur des momentan unterhalb der Anzeigeeinheit (3) befindlichen Untergrundes ist.

2. Handführbare Vorrichtung (1) nach Anspruch 1, **dadurch gekennzeichnet, dass** die Sensoreinheit (17, 18) an einem Träger (16) angeordnet ist, der um eine Rotationsachse drehbar an dem Gehäuse (2) gelagert ist, die während des Detektierens im Wesentlichen senkrecht zur Oberfläche des Untergrundes ausgerichtet ist.

3. Handführbare Vorrichtung (1) nach Anspruch 1 oder 2, **dadurch gekennzeichnet, dass** die Sensoreinrichtung (14) eine mit der Sensoreinheit (17, 18) verbundene Auswertungseinheit (20, 21) aufweist, die dazu eingerichtet Ist, die von der Sensoreinheit (17, 18) erzeugten analogen Sensorsignale zu erfassen und die erfassten analogen Sensorsignale an die Datenverarbeitungselnrichtung (15) zu übertragen, wobei die Übertragung der Sensorsignale elektronisch, optisch oder per Funk erfolgt.

4. Handführbare Vorrichtung (1) nach Anspruch 3, **dadurch gekennzeichnet, dass** die Auswertungseinheit (20, 21) oder die Datenverarbeitungseinrichtung (15) derart eingerichtet sind, dass eine Umwandlung der erfassten analogen Sensorsignale in digitale Sensorsignale erfolgen kann.

5. Handführbare Vorrichtung (1) nach einem der Ansprüche 2 bis 4, **gekennzeichnet durch** eine direkt oder indirekt mit der Datenverarbeitungseinrichtung (15) verbundene Einrichtung zum Erfassen der jeweiligen Winkelposition der Sensoreinheit (17, 18).

6. Handführbare Vorrichtung (1) nach einem der Ansprüche 2 bis 5, **dadurch gekennzeichnet, dass** die Sensoreinrichtung (14) wenigstens zwei an dem Träger (16) angeordnete Sensoreinheiten (17,18) aufweist.

7. Handführbare Vorrichtung (1) nach Anspruch 6, **dadurch gekennzeichnet, dass** die beiden Sensoreinheiten (17, 18) als aktive Sensoreinheiten (17, 18) ausgebildet sind und jeweils mindestens eine Spule aufweisen, die so gewickelt ist, dass ihre Empfindlichkeitsmaxima auf einer Achse liegen, wobei die Achse des Empfindlichkeitsmaximums mindestens einer Sensoreinheit (18) gegenüber der Rotationsachse derart geneigt ist, dass diese bei einer Bewegung um die Rotationsachse eine vorauseilende oder nacheilende Bewegung durch den zu untersuchenden Raum durchführt,
während die Achse des Empfindlichkeitsmaximums der jeweils anderen Sensoreinheit (17) eine andere oder keine Neigung zur Rotationsachse aufweist.

8. Handführbare Vorrichtung (1) nach Anspruch 7, **dadurch gekennzeichnet, dass** die jeweils erfassten Winkelpositionen der Sensorspulen und die jeweils mit diesen erfassten Dämpfungsverläufe bzgl. der Dämpfung des ausgesendeten elektromagnetischen Feldes erfasst und an die Datenverarbeitungseinrichtung (15) übermittelt werden, wonach mittels der Datenverarbeitungseinrichtung (15) die erfassten Dämpfungsverläufe über die erfassten Winkel korrelierbar sind.

9. Handführbare Vorrichtung (1) nach Anspruch 7 oder 8, **dadurch gekennzeichnet, dass** der Neigungswinkel ϕ der Achse des Empfindlichkeitsmaximums der mindestens einen Sensoreinheit (18) gegenüber der Rotationsachse 5 bis 60°, vorzugsweise 10 bis 45° und besonders bevorzugt 20 bis 30° beträgt

10. Handführbare Vorrichtung (1) nach Anspruch 6, **dadurch gekennzeichnet, dass** die beiden Sensoreinheiten (17, 18) als Radarsensoren ausgebildet sind, wobei die Richtachse mindestens eines Radarsensors gegenüber der Rotationsachse des Trägers (16) derart geneigt ist, dass diese Richtachse bei einer Bewegung dieses Radarsensors um die Rotationsachse eine vorauseilende oder nacheilende Bewegung durch den zu untersuchenden Raum durchführt, während die Richtachse des jeweils anderen Radarsensors eine andere oder keine Neigung zur Rotationsachse aufweist.

11. Handführbare Vorrichtung (1) nach Anspruch 10, **dadurch gekennzeichnet, dass** die jeweils erfassten Winkelpositionen der Radarsensoren und die jeweils mit diesen erfassten Echoverläufe erfasst und an die Datenverarbeitungseinrichtung (15) übermittelt werden, wonach mittels der Datenverarbeitungseinrichtung (15) die erfassten Echoverläufe über die erfassten Winkel korrelierbar sind.

12. Handführbare Vorrichtung (1) nach Anspruch 10 oder 11, **dadurch**
**gekennzeichnet, dass** der Neigungswinkel ϕ der Richtachse des mindestens einen Radarsensors gegenüber der Rotationsachse 5 bis 60°, vorzugsweise 10 bis 45° und besonders bevorzugt 20 bis 30° beträgt.

13. Handführbare Vorrichtung (1) nach einem der vorhergehenden Ansprüche, **gekennzeichnet durch** eine am Gehäuse (2) befestigte Handhabe (4).
